# EUROPEAN PATENT APPLICATION

(11) **EP 1 441 511 A1**
(43) Date of publication of application: **28.07.2004**
(21) Application number: 04006828.0
(22) Date of filing: 21.10.1998
(51) Int. Cl.: H04N 5/445

(54) **Interactive television control/operaring system**

(30) Priority: 11.08.1998 GB 9817421
(62) Divisional of application: 98949111.3
(71) Applicant: 4TV Limited, Northwich, Cheshire CW9 7LS (GB)
(72) Inventor: Kenneth, Austin, Northwich Cheshire CW8 3AR (GB)
(74) Representative: Cardwell, Stuart Martin

(57) **Abstract**

An interactive television control/operating system providing a system for the display of targeted commercials on a television receiver comprising means of receiving commercials, means for selecting from said commercials, means for displaying selected commercials. The selected commercials are arrived at based on a list of preferences created by the viewer. The commercials can be full screen multiple frame images or so called banner advertisements such as those transmitted with Electronic Program Guides. The preferred commercials are stored in local memory and displayed in place of non-preferred commercials.

## Description

The present invention relates to an interactive television control/operating system.

Televisions have become increasingly complex over the years and are now merging functions normally associated with computers however these functions have not been integrated with the TV functionality in a way that makes them easily accessible during program viewing and the range functions is also too limited.

Televisions are in widespread use for viewing broadcast program material, however material transmitted is easily missed such as telephone numbers, weather forecasts and other such items. Many television sets are installed in large rooms where they are positioned some distance from the viewer making viewing of small details and text difficult, also many viewers have impaired vision which compounds the situation.

Over the years the number of television channels has increased significantly, typically viewers can select from normal terrestrial channels and cable or satellite transmissions. Many viewers find it increasingly difficult to keep track of the programs they wish to view. Many attempts have been made to assist viewers by providing electronic program guides (EPG) such as Teletext and TV Guide Plus+, whereby a viewer can select future programming based on electronically transmitted program information. For systems with tens of channels this process can be time consuming especially if setting program schedules for more than one day or for programming both TV and VCR scheduling.

Television broadcasts are usually periodically interrupted to display commercials, these are usually targeted at the viewer based on the program being viewed or related to the time of day. These commercials are for the most part annoying as they are repetitious and are not targeted sufficiently accurately at the viewer.

Television program and commercial content is diverse which often prompts a viewer to remember a thought or creates a desire to initiate an action, such as remembering to service their car, buy washing powder, book a particular holiday or remember to ring a friend. It is generally not convenient to stop viewing in order to make a note of these items and most often they are forgotten when continuing to view.

One aim of the present invention is to provide an operating system for the TV with a simple interface that can be extended to add functionality to the TV without substantially changing the look or feel of the interface or viewing experience. A further aim is to provide a range of in-built functions or programs that significantly enhance the viewing experience and events surrounding it.

Accordingly, one aspect of the invention provides a television operating system comprising a television for displaying moving pictures from a live television program or a recordedr pre-recorded item intended to be displayed on a television, and comprising means operable to enlarge a prescribed area of a displayed picture, means operable to select whether said enlarging means is operable.

The area to be enlarged may be pre-programmed or preferably selectable by the user. More preferably means is provided for selecting the area to be enlarged from within the overall area of the television display. The means to select operation of the enlarging means is preferably operable remotely using a hand held I/R controller or the like. The enlarged area may be set at a specific magnification. The magnification factor may be adjustable and may be set to a specific magnification by the user. Alternatively the enlargement may be continuously variable in the manner of a zoom facility. Preferably such a system would operate simply enabling rapid zoom in and out functions whereby the viewer can easily discern detail even at a distance from the television receiver. Said zoom and pan facility could also conveniently operate on stored snapshot images described further hereinafter.

Where an analogue tuner is involved means is provided for digitising the signal to more conveniently facilitate enlargement. Memory means is provided for storing the contents of the chosen area of the signal to be enlarged as a pixel array of the selected image. The area is analysed to facilitate enhancement of the resolution by for example adding white or black pixels or coloured pixels to the expanded pixel block which is to be displayed. Accordingly, there is further provided image enhancement means.

Another aspect of the invention provides a television control/operating system for use with a television displaying images be they moving pictures from a live television program or a recorded or pre-recorded item intended to be displayed on a television or otherwise, and comprising means for capturing a displayed video image, means for selecting the image to be captured, and means for storing and/or printing the selected image.

More particularly, the system comprises memory means for storing a plurality of selected images as digital representations, means for converting said stored digital representations into a signal for displaying on television, and means for selecting from a plurality of stored images the image for display. Preferably selecting the image to be captured and /or retrieved is performed with a remote controller.

The above described system makes possible the ability to freeze a video image or take snapshot pictures of items of interest such as the weather forecast, adverts, forthcoming broadcast trailers, pop groups and subjects related to homework etc. Advantageously, the snapshots could be saved to memory or printed on a suitable printer, thereby enabling a plurality of such items to be saved and retrieved.

Subtitling or captioning is also advantageously provided to enable textural or other information to be appended to an image prior to printing or committing to memory. Means is also provided for reviewing one or more of a plurality of stored images for display on a television or for printing the same. The present invention may be used in combination with our earlier videotape indexing system to provide a convenient low-cost long-term storage of images that can be categorised and saved to videotape for later retrieval. Another aspect of the present invention contemplates selectively capturing a plurality of sequential video frames and/or audio content of relatively short duration of a program transmission on a digital memory means, such as a hard disc or other semi conductor memory. The videotape storage capabilities may be used to even greater effect to automatically catalogue, edit and index video segments.

Accordingly, yet another aspect of the invention provides a system provides a system for taking a copy of images displayed on a television where said television may be displaying a live television program or recorded or pre-recorded item intended to be displayed on a television, in which said images comprising a video segment are recorded on memory by selecting at least a start point for commencement of recording.

More particularly a video display sequence is selected for recording to a hard disc storage medium or the like, with the user controlling at least a start point and preferably also the end point, where the television is displaying a live television program or a recorded or pre-recorded item. The sequence comprises a segment of the displayed contents with a start and end points, a remote device controls selection of image start and end points, a digital memory is used for storing a plurality of video frames corresponding to the segment. A selection mechanism described further hereinafter may be utilised for remotely selecting from a plurality of segments for display. Conveniently an automatic method of categorising the segments into groups and archiving the groups onto videotapes or other media is used. Issuing a record command instantly causes recording of displayed television signal, coding thereof and storage thereof. This digital storage VCR hybrid is useful for storing and cataloguing numerous short video clips such as recipes, sporting moments, pop videos, weather forecasts, commercials, jokes, announcements or other material that would otherwise be lost due to the complexities of operating a VCR and checking for a suitable tape etc.

The recorded sequence is conveniently referred to as a video segment and is recorded primarily for the purpose of subsequently storing on video tape or other mass storage media such as DVD for subsequent retrieval and play back. Means is provided to convert the digital signal to an analogue TV signal for recording on analogue videotape or other media. Thus a plurality of video segments are recorded and are selectable for replay. The subject of each video segment is categorised for indexing purposes and/or for storing with other material in the same category. The categorisations may be determined by the user or automatically having regard to data transmitted with the program.

An aim of a still further aspect is to provide an improved method of selecting television programs for viewing.

Accordingly, a still further aspect of the invention provides a method of selecting television programs for viewing based on selecting TV programs based on what is usually watched, be it for a particular user or more generally for any users of the system, rather than using a program listing in an electronic program guide. This avoids having to scroll through a large list of forthcoming TV programs. The system can be used to show what is normally watched on a particular day for a given time thus avoiding missing a favourite program. The system is further adapted to allow a list of possible selections to be displayed in a prioritised order according to how often a program is viewed. Viewer groups can be set up or viewer names can advantageously be appended to the list. Program trailers are often transmitted for forthcoming programs, these can advantageously also be used for adding programs to the list by pressing the appropriate control button or command sequence.

The system is further advantageously adapted to inform the viewer of discontinued programs and of their replacements or of rescheduling. When switching to a program that is not contained in the view list the user is able to request program details and decide whether to view and/or whether to add to the view list.

The store of viewing preferences may be used to provide a list of suggestions for what to watch or record on a VCR based on what is usually watched for example at a particular time on any day. Viewing preferences can be automatically assessed by keeping a track of programs which have been watched, for example over a specific period. Conveniently means is provided for marking a broadcast program currently being displayed. The marking can be used in conjunction with the system control means to modify the view list, for example to cause items to be added or removed or to specify an item not to be added to the list. Means may be provided to add items to the view list but in such a way that it is hidden from view at least as far as a main list is concerned. Means may be provided to automatically add an item to the view list after viewing the item for a predetermined time. Means may be provided to add an item on days/and or times other than the current day or time where the item is part of a series transmitted on different days and/or times. This conveniently operates by extracting details of broadcast times from an electronic program guide or more preferably from data transmitted with the program. Means may be provided for automatically warning a viewer that a program is about to be added to the view list. A countdown timer or such like may be employed to enable a cancel function to be activated by a viewer.

Preferably on selecting the view list at least one program suggestion will be displayed usually identifying the next occasion when a program of a particular category or more usual a category usually watched by the viewer, is due to be shown. Different viewers may have their own view lists. Program suggestions are preferably ordered according to the frequency of viewing. Means may be provided for checking whether a programming suggestion has been rescheduled or is still scheduled for transmission. Means may be provided for informing a viewer that a program view suggestion has been rescheduled. Means may be provided for amending the view list accordingly.

More preferably means is provided for receiving data transmitted with television signals and/or additional data accessed via a modem. The data may include program details in text form, the category of the material transmitted, along the lines used for VBI data transmissions, scheduling times and information relating to follow on programs for serials and/or multi part programs, which information can be captured and utilised to generate the view lists.

Means is preferably provided to extract information relating to a displayed program including for example channel, program title, start time, end time and category and to display same on a television screen and/or to add to said view list.

It is particularly advantageous if program trailers are accompanied by such data transmissions to enable such program to be added to the view list.

Means are provided for editing the view lists. Conveniently means is provided for adding entries to the view list from an electronic program guide schedule.

More conveniently still means is provided to make a selection from the view list which selections cause the television to switch to that channel immediately or at the designated start time for the program selected.

A still further aspect provides a method of taking and replaying audio notes. These may be recorded by a microphone built into the TV remote control or by a microphone incorporated into the TV, set top box or an external microphone. Audio notes can be replayed later by pressing the appropriate button or issuing the necessary commands. Alternatively audio notes can be appended to the program list to be played at a specific time. Different messages can be recorded and assigned to groups or user names and edited or deleted. The audio transmitted with the TV program can be automatically muted during record operations.

The audio notes of the present invention can also be a copy of the audio content transmitted along with program material, such as phone numbers or product information, jokes etc. The system is further adapted to run speech recognition software to convert audio notes into text that can be viewed, printed or stored.

More particularly this aspect of the invention provides a system for storing audio notes while using a television comprising, means for converting sound into digitised samples, means for storing said digitised samples in a television or television peripheral and means for replaying said digitised samples as an audio signal, means for causing said digitised sample to be stored, means for terminating the storage of digitised samples and means for causing said digitised samples to be played.

Preferably the system further comprises means for editing said audio notes, for example to truncate, concentrate or delete the recorded items, or assign to a group or name. Preferably means is provided to automatically mute the audio output from the television during recording.

Means is conveniently provided for converting said stored samples to a text equivalent. Conveniently said means includes a speech recognition function. Means is conveniently provided for editing the text. Means is conveniently provided for printing the text and/or transferring the text to another device.

Yet another aspect of the invention provides means of receiving and displaying commercials targeted at a viewer based on a list of preferences created by the viewer.

These preferred commercials are stored in local memory in digital form and may be automatically inserted during commercial breaks replacing the normally transmitted commercials. While viewing commercials the viewer can mark a commercial as viewed, replay a commercial or indicate whether further information is required. If further information is selected, a locally stored extended version of the advert can then be viewed or the system can go online to connect to an external source of data. Preferred commercials are acquired by the system during standby mode, when the TV is not in use the system preferably switches the tuner to a channel that is preferably dedicated to the continuous transmission of commercials which may cycle every hour or so. Alternatively the system can receive broadcasts during the night thus avoiding the need to dedicate a channel to commercials during peak hours. Preferred commercials can either entirely replace conventional commercials or more advantageously replace a subset leaving certain general commercials un-replaced. Data transmitted along with each commercial in theVBI can serve as a trigger to cause commercial substitution, VBI encoded data is decoded by DEC means. Viewers watching a program without the present system will see the conventional commercials that appear in the program breaks, the system is thus able to operate within the conventional broadcast system yet achieves targeted advertising which benefits both the broadcaster and viewer.

More preferably the system for the display of targeted commercials on a television receiver comprises, means for receiving commercials, means for selecting from said commercials, and means for displaying selected commercials.

Preferably means is provided for the user to select which of the commercials are to be recorded. For this purpose the commercials are categorised. The categories of commercial may be correlated with the categories of program that a viewer watches. The selection of the commercials for recording and/or displaying may be achieved automatically having regard to the categories of program which the viewer watches. The correlation may be dictated by the advertiser more preferably the user enters data into an onscreen form for capturing viewer preferences using cursor keys to select from options.

This aspect of the invention applies equally to so called "banner" advertisements which are transmitted along with other data for example as part of a text transmission or more particularly as part of an electronic program guide (EPG) transmission. Electronic programme guides are transmitted at frequent intervals (for example every second or so) for capturing by the memory means of a set top box. Banner advertisements are usually messages, which only occupy part of the area of the television screen and are intended to be displayed alongside other (usually unrelated) information. At present the "banner" advertisement is transmitted for a considerable period of time - perhaps in a single instance lasting several hours or multiple instances each lasting few minutes. The primary purpose of the transmission is to have the EPG available for access by the user.

According to one proposal the "banner" advertisement is captured in the memory for later retrieval. More particularly a plurality of "banner" advertisements are stored in memory. More particularly still each transmission of the EPG may be accompanied by the transmission of a different banner advertisement. By this means it is possible to build up a store of a banner advertisements in memory. Preferably whenever the EPG is viewed one of the stored advertisements will be retrieved and displayed in any space allocated for the banner advertisement. Of course the existing banner advertisements are not specifically targeted at the particular viewer. This is remedied according to an aspect of the present invention by arranging for the advertisements to be categorised just as mentioned herein in connection with full screen commercials. It is preferred that only those commercials in the user selected category or categories are captured and stored in memory from the plurality of different banner advertisements which are transmitted.

The software acts to display banner advertisements from the plurality of stored advertisements - say on a sequential basis, where only advertisements of the desired category are stored or where all the different advertisements are stored the software acts to select out those of the desired category and display in turn.

According to another aspect, where a plurality of banner advertisements are transmitted en-block, for example, with every periodic transmission of an electronic program guide, the banner advertisements are assigned category codes and decode software acts to select directly from the plurality of transmitted banner advertisements and advertisement for display which fall into a user selected category.

This does not require the advertisements to be stored. It is applicable to a digital system where a plurality of banner advertisements can be readily transmitted along with digital pictures of data. Some bandwidth may be lost as a consequence of transmitting the plurality of banner advertisements simultaneously.

Further optional provisions include the ability to view what may be referred to as an extended advertisement. A banner advertisement may be linked to one or more screens of advertisement information (text and/or pictures) which are stored in memory and retrieved on a user command. Optionally the banner advertisements and (or the extended advertisements) may include or comprise an animated display portion.

Another aspect of the invention proposes a system for recording a digitally transmitted television broadcast on an analogue video cassette recorder or other analogue device whilst viewing another digital broadcast, the system comprising two digital tuners and at least one digital to analogue converter, and wherein one digitally transmitted television signal is decoded using one of the digital tuners and converted into an analogue signal using the digital to analogue converter and relayed to the analogue video cassette recorder or other such analogue device, whilst leaving the other digital tuner available for decoding another digital transmission.

The various aspects of the present invention will now be described further hereinafter, by way of example only, with reference to the accompanying drawings; in which: -
Figure 1 illustrates an image displayed on a television screen;
Figure 2 illustrates the television screen showing an enlargement of part of the image displayed in Figure 1;
Figure 3 illustrates the image display of Figure 2 showing on-screen menu command options;
Figure 4 illustrates the image display of Figure 2 showing another on-screen command option;
Figures 5, 6 and 7 illustrate alternative configurations of control means for selecting the area of interest for enlargement and caption control;
Figures 8 and 9 illustrate means for controlling the enlargement selection and scale, further image and further caption control options;
Figures 10 and 11 illustrate further image control options;
Figure 12 illustrates the display of Figure 2 with added captions;
Figure 13 illustrates an image displayed on a screen and a selection of consecutive video frames and associated audio;
Figure 14 illustrates a screen displaying a plurality of snapshot images and on screen menu and control options according to another aspect of the invention;
Figure 15 illustrates in block diagram form signal processing apparatus and pictorial representations of a video cassette recorder and a television for implementing one or more aspects of the present invention;
Figure 16 illustrates one embodiment of remote control unit;
Figure 17 illustrates an alternative embodiment of remote control unit;
Figure 18 illustrates a television screen displaying an example of a viewing list and on-screen control command options according to another aspect of the invention;
Figure 19 illustrates a television screen displaying an example of audio notes and on-screen control command options according to yet another aspect of the invention;
Figure 20 illustrates an image displayed on a television screen with an area marked for enlargement and accompanying resolution enhancement;
Figures 21, 22, 23 and 24 are examples of resolution enhancement options;
Figure 25 is a diagram illustrating further details of one embodiment of remote control handset with audio note facility;
Figure 26 is a block diagram illustrating further details of a preferred arrangement of processing circuitry;
Figure 27 is an example of screen display used in connection with the targeting of commercials;
Figure 28 is an example of a screen display illustrating another aspect of the invention in relation to the capture and display of banner advertisements, and
Figure 29 illustrates diagrammatically how a banner advertisement may have extended advertisement material associated therewith.
Figure 30 illustrates a coding system;
Figure 31 illustrates data representing categories, and
Figure 32 illustrates a system utilising conventional semi-calculator memory to store user preference information.

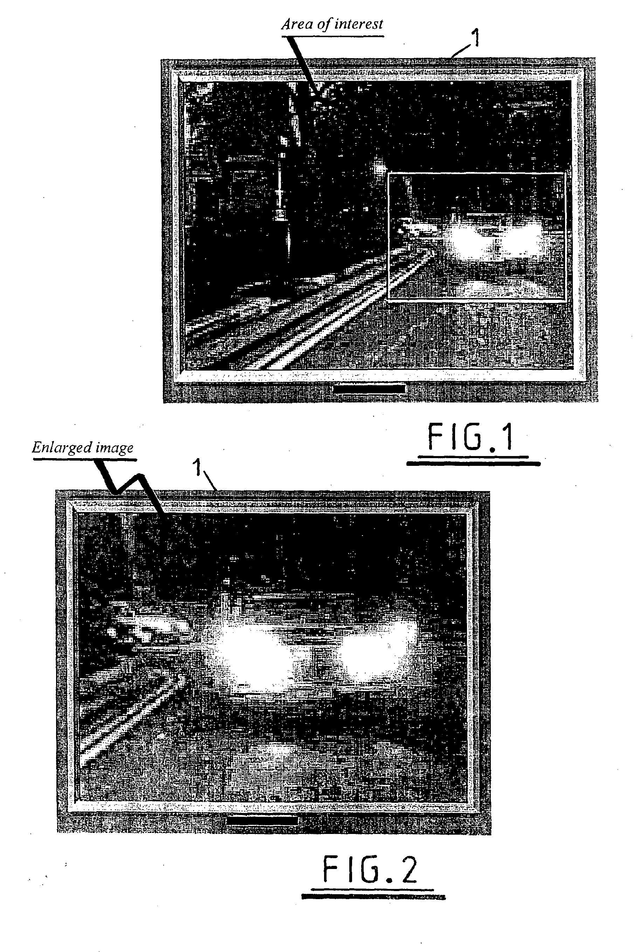

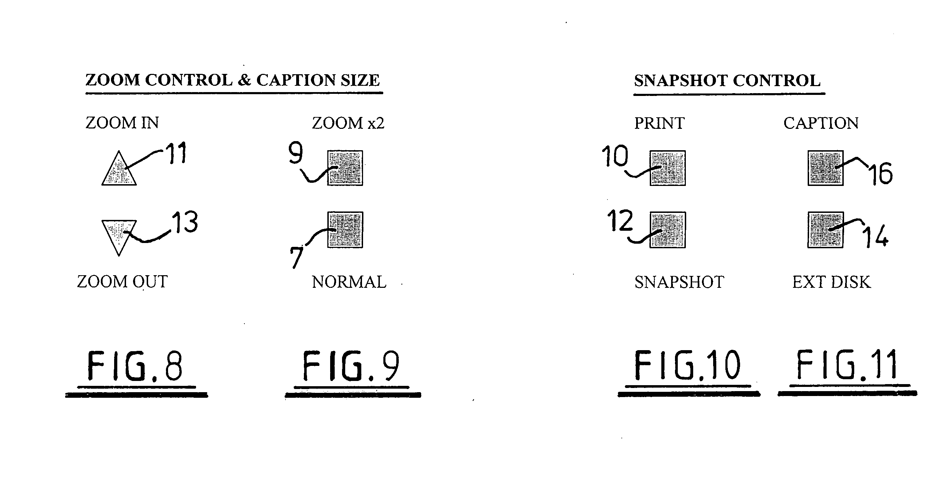

A first aspect of the invention concerns the enlargement of an image displayed on a television screen. The screen surround is shown at 1 in Figures 1, 2, 3, 4 and 12. An area of interest which is to be displayed to an enlarged size is shown outlined in white at 3 in Figure 1. The image in that area is shown enlarged to full screen size in Figures 2, 3, 4 and 12. The degree of enlargement or magnification may be fixed at say 2x magnification, selectably programmable by the user say in pre-set steps or infinitely variable within upper and lower limits. Figure 9 shows two control buttons 7, 9 which may be provided on a controller to facilitate switching between the normal image and an enlargement of an area thereof at 2x magnification. Figure 8 shows two control buttons 11, 13 which may be provided as a controller to facilitate variable enlargement on a continuously variable basis between normal image size and a set maximum enlargement.

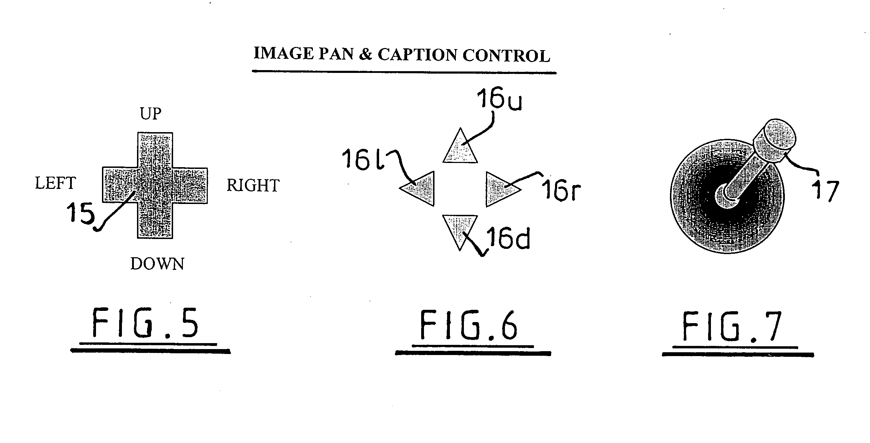

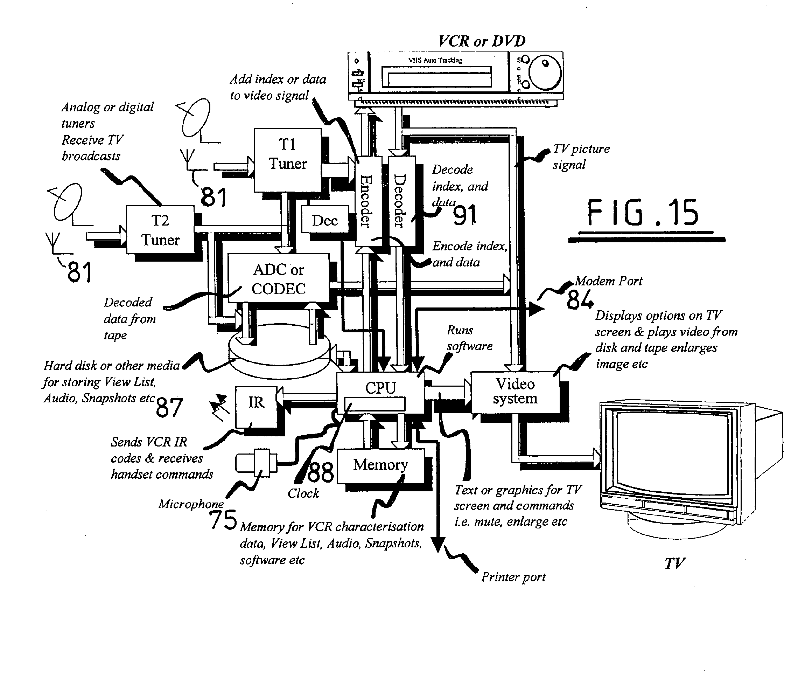

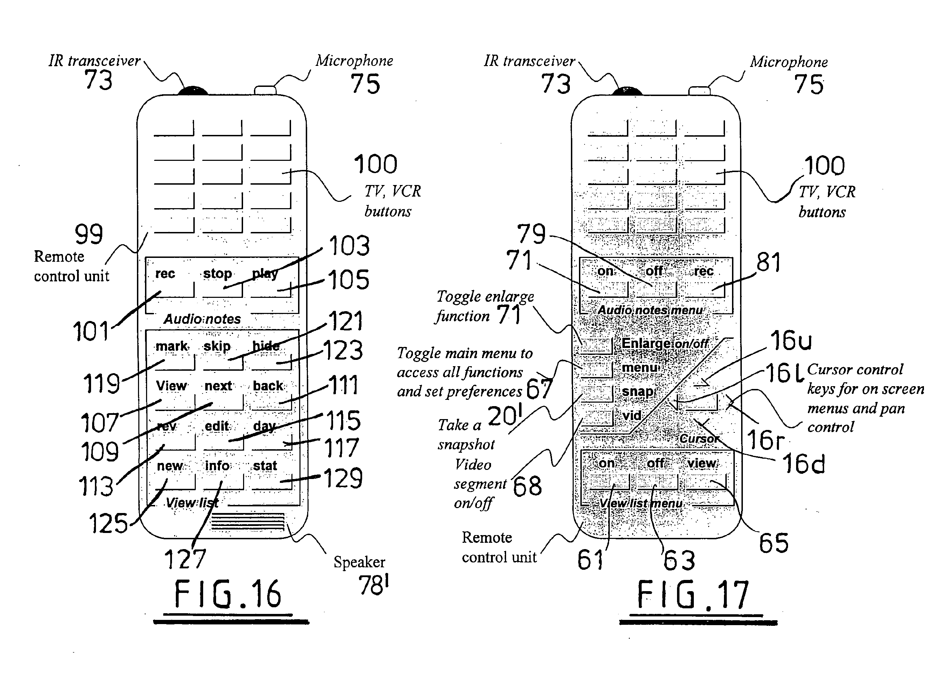

Figure 5 illustrates one embodiment of control switch 15 for controlling positioning of the area of interest. It will be set to default to a central position. The switch permits the user to centre a movable cursor or an area of interest box on the area of the image to be enlarged. Thus, the box may be moved up, down, to the left or right until the desired position has been arrived at. Figure 6 shows an alternative configuration of control switch 16 for effecting the same movement as that of Figure 15. Reference 16l, 16r, 16u and 16d denote movements to the left, right, upward and downward respectively. Figure 17 illustrates a remote control handset described further hereinafter but having equivalent control switches 16l, 16r, 16u and 16d. Figure 7 shows a yet further alternative 17 to the control switches of figures 15 and 16 for effecting the equivalent movements in the form of a joystick control. The control switches of figures 5, 6 and 7 have a dual function for controlling cursor positioning for other command options as discussed further hereinafter.

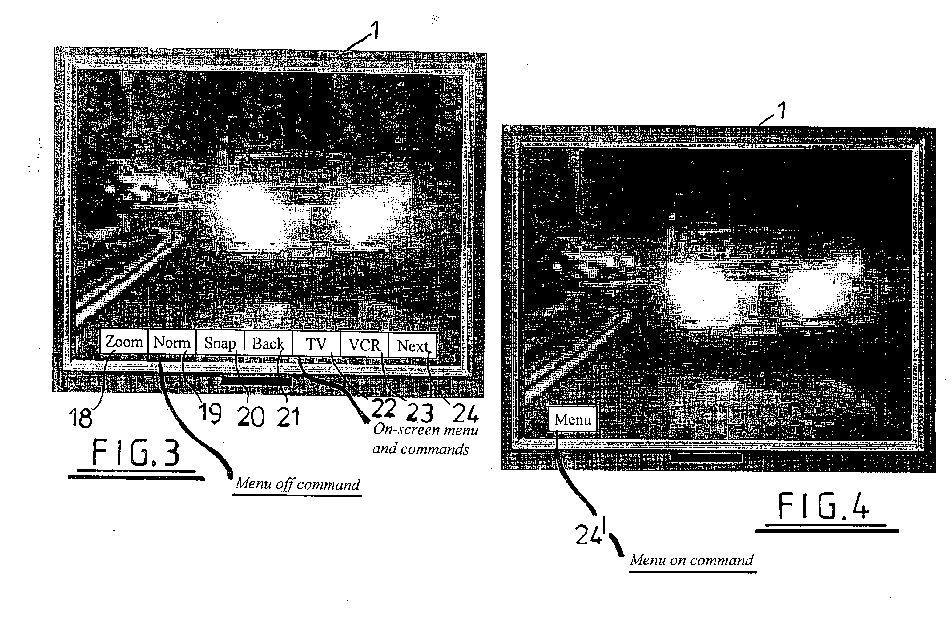

Figure 3 shows on screen menu and command options which from left to right are zoom 18, norm 19, snap 20, back 21, TV 22, VCR 23 and next 24.

Selection of the listed functions may be by movement of a cursor to highlight or otherwise select the desired option - perhaps most conveniently on a scroll through basis. Some of these available menu options are represented by keys on the remote control handset of figure 17 namely an enlarge on/off key 71, a snap key 20 and a menu key 67.

The zoom command option 18 or the enlarge key 71 changes the display into enlarge mode and activates means for positioning an associated area of interest and/or magnification controls therefor. The norm command option reverts to the normal picture display and deletes any on screen menu command display. The snap 20 and back 21 commands concern switching between snap shot images and normal image aspects described further hereinafter. The TV 22 and VCR 23 control switching between commands for television signals and videocassette recorder command options on the case may be. The Next 24 option brings up any subsidiary menu 24 options. Figure 4 illustrates a simple second on-screen command option simply providing an option for selecting say the menu shown in Figure 3, other commands or menus can be similarly created and accessed through a main menu or appropriate short cut buttons on the remote controller such as 77 and 61 of Figure 17.

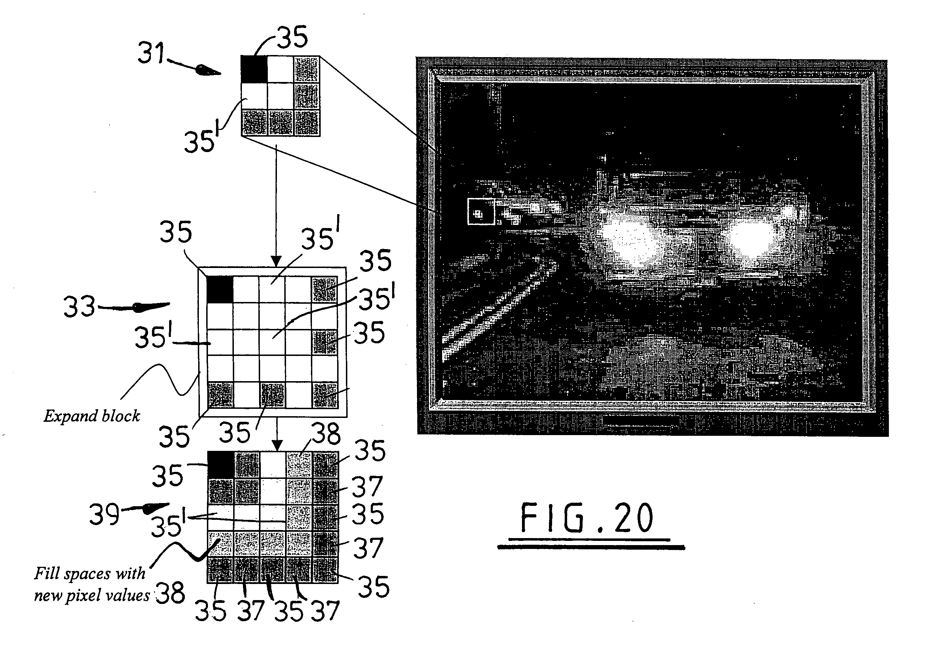

Enlargement of the displayed image may require the resolution of the enlarged image to be enhanced. In this regard reference is made to figures 20 through 24. By way of example a 3 x 3 pixel array from within the area of interest of the image which is to be enlarged as shown at 31 in figure 20. The expanded version of this array is represented in this example by the block shown at 33. The original array 31 is analysed for the distribution of black and white pixels representing the luminance component only. Thus in the example, the top left hand comer pixel 35 is black and all the pixels 35 along the lower edge and right hand edge are black, each red, green and blue component can be analysed in a similar manner with the final pixel value being a composite of each.

In the expanded block, pixel 35 remains in the top left hand comer and the other black pixels 35 are distributed along the lower and right hand edges. Following from the original analysis, the resolution enhancement software acts firstly to produce an expanded frame with black in the top left hand comer and along the lower and right hand edge by adding in pixels 37 as shown in block 39. The resolution enhancement software adds further pixels 38 of a colour to tone down white areas where white pixels are perceived to be inappropriate so that the resulting expanding image would be as shown at 39 in the case of this example.

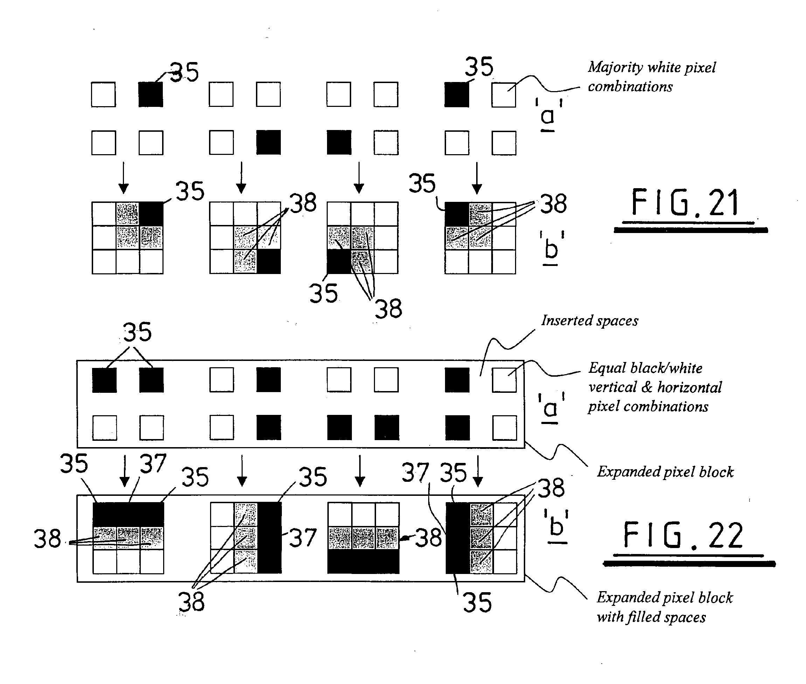

Figure 21 shows four examples of pixel arrangements which are predominantly white and how an expanded array has 3 coloured pixels added at 38 surrounding the black pixel 35 to produce an expanded array with the same visual impression. Pixels added at 38 are calculated according to the difference between neighbouring pixels, in this example the number and value white to black and their disposition according to Figures 21 to 24 is utilised. Figure 22 shows the resolution enhancement for arrays of equal black/white vertical and horizontal pixel combinations shown expanded at "a" before resolution enhancement, and at "b" after resolution enhancement. Added black pixels are referenced 37 and added coloured pixels as 38.

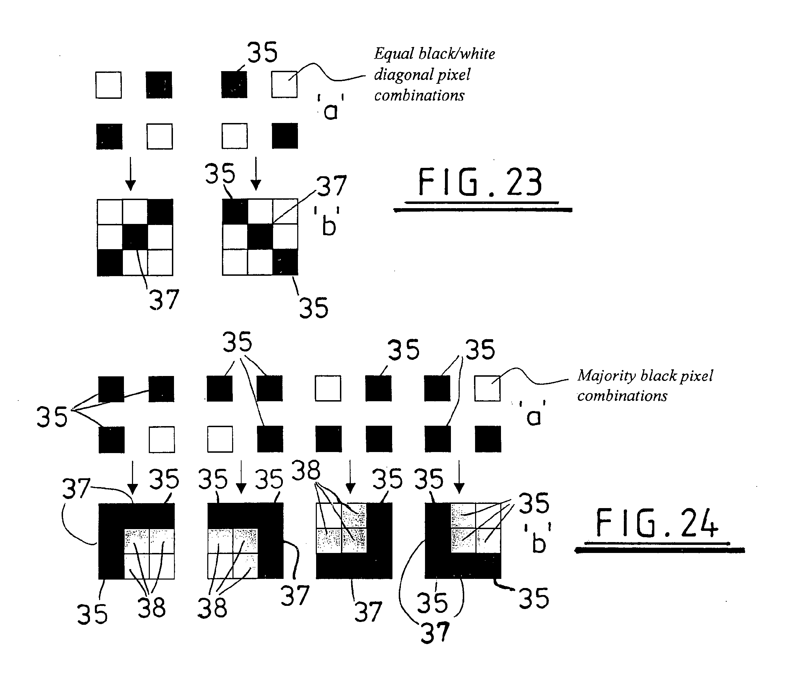

Figure 23 shows equal black and white diagonal pixel combinations expanded but before enhancement at "a", and after enhancement at "b". The additional black pixel is referenced 37.

Finally, Figure 24 shows a majority of black pixel combinations with the resolution enhancement shown at "b". The same notation applies as previously. The enlargement function is intended to operate predominantly on moving images transmitted as live television signals or as replayed from a recorded or pre-recorded video tape or other video storage medium. Enlargement requires repositioning of the image signals (pixels) to take account of the degree of enlargement and addition of the signals for the extra pixels to improve the resolution. The enlargement could also be applied to retrieval from memory of still video images previously captured and stored in memory.

Reference is now made to another aspect of the invention which concerns the ability to take snap shots of image being transmitted and viewed as a live television transmission to facilitate review at a later date. For example it could be useful to have available for future reference one or more images of a weather forecast. This is conveniently done by using a control command to take a "copy" of the image currently being transmitted using the snap control shown in figure 3 or 20 of figure 17. By converting the signal into a digital signal where not already in that format it can be saved in a digital memory such as a hard disc, for subsequent retrieval and display on screen - see 87 of Figure 15. The provision of a printer port connection - see 86 of Figure 15 permits printing out of selected snapshot images. Figures 10 and 11 show various control options associated with the snapshot facility. Button 10 controls printing of a snapshot. Button 12 is an alternative control for taking a snapshot. Button 16 is provided to initiate caption generation. Button 14 facilitates downloading of the snapshot to an external disk storage medium.

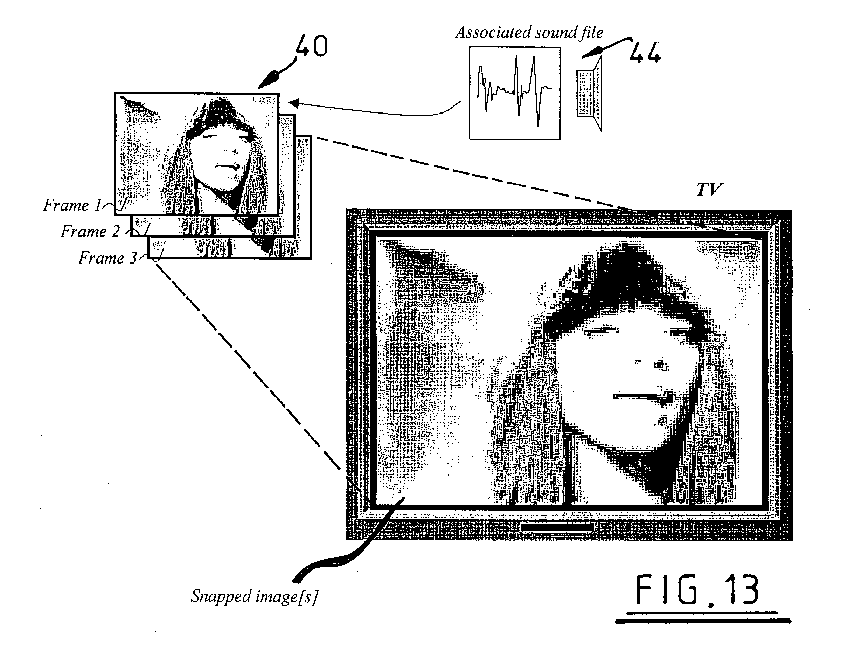

A series of frames may be stored which are taken at periodic intervals or as a sequence of frames, see 40 in figure 13 which shows four frames, and stored for display as either still images or as a moving sequence as the case may be. These frames could be subsequently recorded onto video cassette tape or other media for longer term archive storage and reference. Audio signal may be added as illustrated at 44 in figure 13. Caption information may be added.

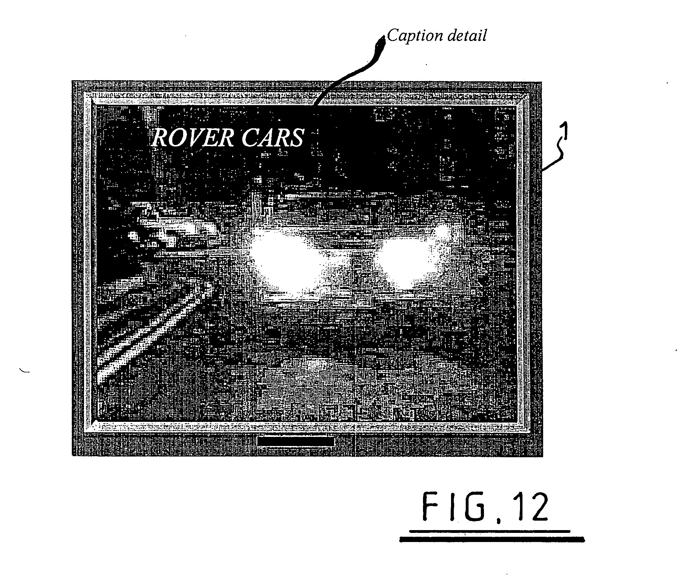

Referring now to figure 12, this illustrates the enlarged image of figure 2 which has been saved as a snap shot image and to which a caption has been added. In this instance the words Rover cars. Positioning of the caption is controlled by using the control switches 161, 16r, 16u, 16d or equivalent to control movement of a cursor, and appropriate graphics generation software to add the desired text either manually or by pulling in text from caption data transmitted with the image. Means for generating captions is well known in the art and is not described further herein. The snap shot image may be the full size frame or an enlarged part thereof.

It is a further advantageous feature if the snap shot images are categorised to permit storing in an index which is organised into categories, whereby snapshots or video segments are automatically appended to a portion of video tape or other media in a position relative to similar material previously recorded. The categorisation may be determined by the user or extracted from categorisation data or program content data transmitted with the original image.

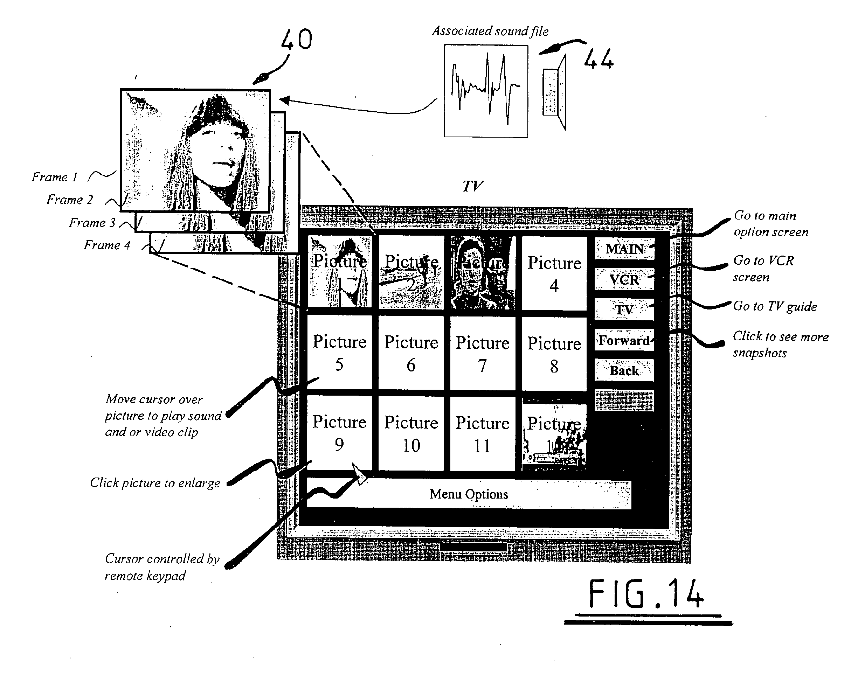

The images captured from the television transmission and which are stored in memory can be displayed on screen as a plurality of images as shown in figure 14 with options for viewing in full size and retrieving any audio signal stored in memory or retrieving associated images which have been recorded, say on video tape. In this respect our earlier proposals regarding automatic video tape positioning can be utilised and are not described in further detail here.

The provision for recording video signals is instigated using a remote control device such as that illustrated in Figure 17. Key 68 controls on/off selection of the video segment option. Once this function has been selected a command is issued to start recording instantly using Key 81. The signal recovered is stored in digital memory - see for example 87 of Figure 15. A plurality of video segments are stored in the digital memory. Figure 14 illustrates the format in which the contents of the video segments can be displayed on screen as a plurality of lead images for each segment. The display option is selected via the VID key 68 and the Menu key 67. The selection of any of the displayed images is described further hereinafter and is equally applicable to the snapshot frames referred to above and to the video segments. Thus the screen displays menu options which are selected by movement of a cursor to the desired item. Main selects a main option screen, VCR selects the VCR screen, TV selects a TV guide, Forward and Back permits the user to see more snapshots on other screens.

Moving the cursor over any one of the displayed images plays the sound or video clip of that image. Clicking on the picture exchanges to full screen size. The cursor is controlled from the remote control handset using keys 16l, 16r, 16u, 16d.

The video segment is categorised by extracting data transmitted with the program or for an electronic program guide whereby the video segment may be placed in the appropriate category of a video tape or other video storage medium for long term reference. The modem port 84/205 facilitates connection to the electronic program guide for example via the Internet.

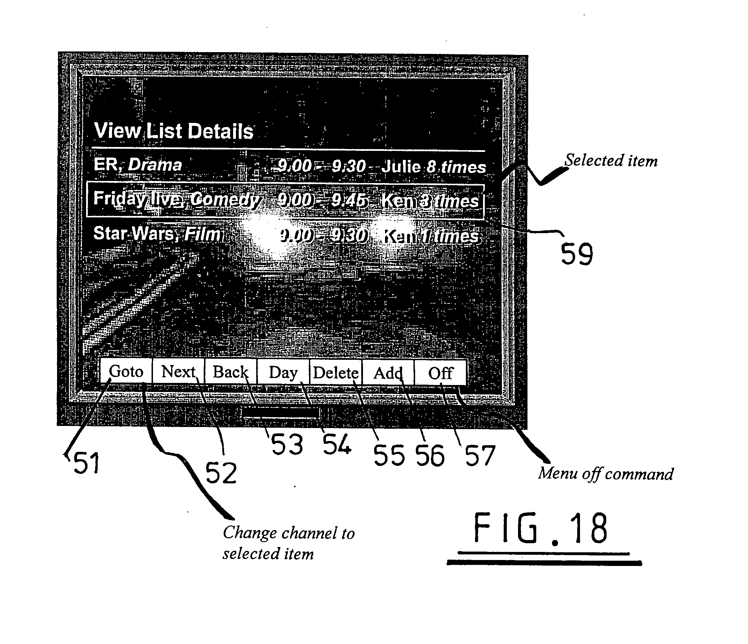

A yet further aspect of the invention concerns the creation, display and utilisation of so called view lists. More particularly these provide for selecting programs for viewing based on what a viewer usually watches, or programs falling into the same category as those he or she usually watches, or programs specifically identified for watching. An example of a view list is shown in figure 18. In this example three programs are listed. The information provided is a brief program title, on indication of the type or category of the program material, the time when it is being shown, the name of the person who typically views either that specific program or that category of program material, and the frequency with which that category of material is viewed. Channel information may be displayed or stored in background memory to facilitate selection of the appropriate channel if any of the items is selected for viewing.

Preferably the displayed information and any related background information is retrieved from data transmitted with the program. This also enables the software to interrogate an electronic program guide to identify similar categories of material and list them as potential viewing options in addition to or as alternative to any usual items which are viewed at any particular time or on any day.

In the preferred embodiment the programming software notes programs which have been viewed and adds them to a viewing list where they are serial type programs, and/or notes the categories of programs viewed. The software programming and control options allow a user to specify categories to be viewed.

Figure 18 shows the following on-screen command menus namely: - Go to 51, Next 52, Back 53, Day 54, Delete 55, Add 56 and Off 57. The numbers are the references used in the figure. Off 57 turn off the menu and view list. Go to commands the television to select and play the selected programs - say that shown within the boxed outlined at 59. The box may be positioned using the aforementioned cursor positioning controls or using the Next 52 and Back 53 command options, which option could be scrolled through or again using cursor positioning controls. The Day command selects the viewing list for a particular day of the week. The Delete option permits a listed program to be deleted from the view list and the Add option permits a new item to be added to the view list. This may be presented as an option for addition to the view list by the software programming selecting appropriate categories of program from an electronic programming guide.

The main function buttons or on screen commands available to the user include:
* a mark function, which adds the marked item to the view list, be it the current program or a trailer for a future program.
* an ignore function which does not add an item to the view list. Usually a displayed item would be added after a preset viewing time.
* a hide function which adds an item to a private list and hides from a general viewer.
Examples of other functions are: -
* New, which informs of new program transmissions
* Today, which list items coming up next etc., based on previous viewing not EPG.
* Edit, which permits manual change to the view list, e.g. add/remove.
* Review list for watched programs for any day.
* Status, item never seen.
* Info, what is this? tell me more, i.e. go to EPG for description and start and end times. Display poster view?

Referring to figure 17, the keys for controlling basic view list menu functions are shown at 61, 63 and 65. Key 61 selects the view list function resulting in a display such as that shown in figure 18. The off key 63 deletes the view list or menu function, whilst the view key permits selection of a displayed item for viewing. Selection is conveniently achieved using the cursor keys 16 and/or menu items 52, 53. Key 67 is a main menu selection key and facilitates access to all menu options to access all functions and setting of all selectable parameters, e.g. magnification range for enlargement/zoom feature, and program categorisation. Key 20' controls taking of a frame snap shot as discussed in relation to figures 13, 14 and 15. Key 68 controls the video segment function.

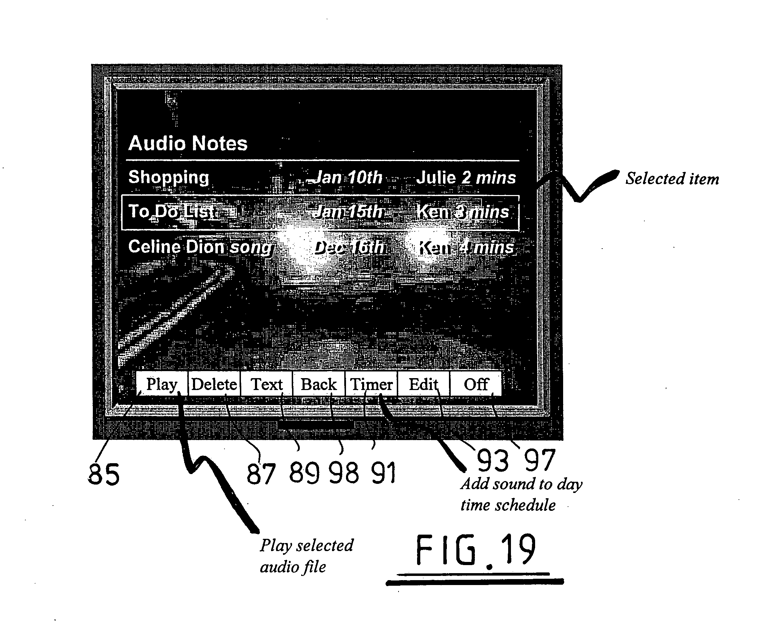

Key 71 instigates operation of the enlarge function - say on an on/off basis. The twelve keys at the top of the unit represent traditional television control keys. The I/R transceiver is shown at 73. Also shown is a microphone key at 75 and audio note menu keys 77, 79 and 81 which are described further hereinafter with reference to figure 19.

The audio note feature has on/off control keys 77, 79 respectively for accessing audio note control options as shown in the command menu in the onscreen display of Figure 19. Key 81 controls an instant record function. Figure 19 shows an example of a list of items which have been recorded. The user has the option to play them using the play option 85, delete them using the delete option 87, convert the audio to text utilising speech recognition software running on the CPU of Fig 15 initiated by the viewer initiating command 89, assign a play time to a recorded item by activating menu item 91 which is operable to cause the recorded item to play at a set time or day to act as an alarm or reminder, edit the contents of the recording or add a text description using the edit option 93, scroll through the listed audio notes using the Back option 95 or turn of the replay of the audio note recording using the Off control option 97.

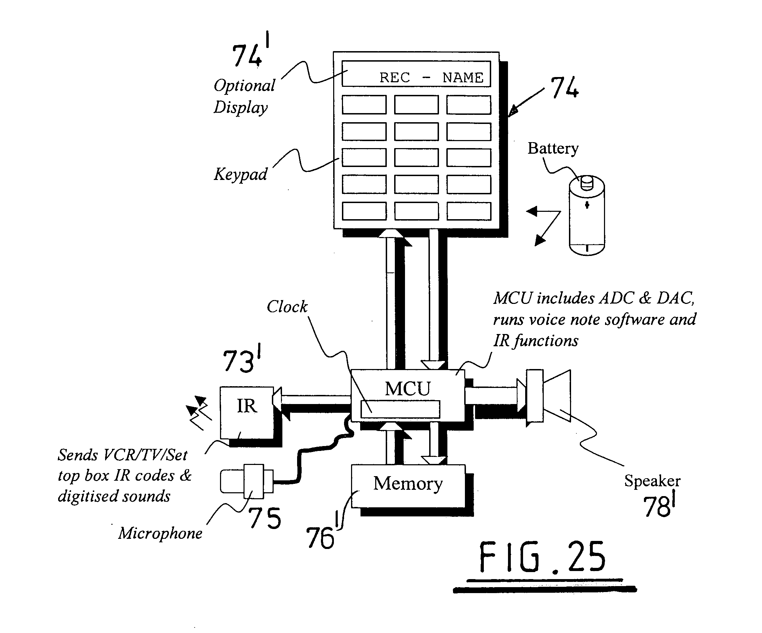

Where according to a preferred embodiment, the microphone is located in the remote control handset the audio signals are converted into a form suitable for transmission over the I/R link to signal processing apparatus of the associated program control system. Means is provided in the remote handset to covert the sounds into digitalized signals. The signal processing apparatus incorporates means for storing the received signals - say on hard disc, and means facilitating subsequent retrieval and replay. Figure 25 illustrates an alternative embodiment where the audio notes are recorded in the remote control handset and includes the provision of an MCU including ADC and DAC circuitry to run voice note software and to control the I/R functions. A part of the key pad is illustrated diagrammatically at 74 and may include an optional display at 74' to signal that the record function is operable. The I/R control is shown at 73' and a memory for the software and storing audio at 76'. A speaker is shown at 78'. The handset may include the provision for relaying the audio notes to the signal processing circuitry to facilitate on screen display of the audio notes as described above.

Referring now to figure 15, here there is illustrated a layout of signal processing apparatus for implementing the various aspects of the invention. Illustrated by reference VCR is a video cassette tape recorder, and by reference TV, a television. Two tuners are illustrated at T and T2. Preferably both analogue and digital signals can be received and decoded by each tuner. A hard disk or other media storage device 87 stores the new lists, Audio, Snapshots etc. A central proceeding unit CPU runs the installed software and the Memory M contains VCR characterisation data and view lists, Audio, Snapshots etc retrieved from the hard disc or from video tape on the case may be, also the installed software. A clock is show at 88. Where two tuners are present simultaneous reception of broadcast programs and recording of preferred commercials may also be conveniently achieved.

An ADC or CODEC unit 89 carries out any necessary conversion of signals from analogue to digital or vice versa. The encoder unit 91 carries out any coding and decoding of information retrieved from or applied to the video tape for use in automatic tape control routines as described in our earlier pending patent applications and not described in any further details herein. The video system 93 displays the various options on the television screen and plays video from disk and tape and tuner and enlarged image etc. A microphone is shown at 75. This may be incorporated in the remote control handset as described earlier. The I/R unit sends video cassette recorder infra red codes and received handset commands and digitised voice samples. The modem port connection 84 facilitates drawing in data from the Internet etc.

Figure 16 shows an alternative configuration of remote control handset 99. It has conventional TV/VCR button 100 for channel selection, an I/R transceiver 73 and a microphone 75. The Audio notes feature is controlled by keys 101, 103 and 105, which control commencement of recordal of audio, stop, record or playback of audio, and play back of audio respectively. The handset includes a speaker for playing back the audio notes. The audio signals are digitalized for transmission over the I/R link to the signal processing apparatus and for storing, in digital memory and the handset converts back to an audio signal in the playback mode alternatively they may be stored in memory 76 of Fig 25.

The remaining keys control the view list options. The view key 107 causes to be displayed or screen the view list for the current time. The next key 109 permits selection of the next list for example on a scrolling basis. The Back key 111 permits scrolling through the lists in the reverse direction. The review key 113 displays a list of programs which are usually watched in a day. The Edit key 115 permits the displayed list to be edited. The Day key 117 permits selection of lists for a particular day. The Mark key 119 allows programs displayed as possible options for viewing to be marked for addition to the lists. The Skip key 121 marks items which are of no interest and the Hide key 12 permits items to be listed but in a hidden manner. The New key 125 allows details of new programs to be displayed and reviewed for inclusion on the view list. The Info key 127 causes the programming software to seek out further information about a listed program, for example by interrogating an electronic program guide and displaying the results or displaying video still or sequence images which have been captured from the programming guide or from program trailers. The Status key 129 indicates whether items have not been seen.

A further aspect of the invention concerns means for receiving and displaying what are referred to herein as targeted commercials, i.e. commercials which are based on viewer preferences and/or interests.

Either tuner T1 or T2 of Figure 15 intercepts commercials which are broadcast, and stores them in memory 87. The commercials may be broadcast on a separate commercial channel or at times when other program material is not usually transmitted - for example at specified times overnight. Where two tuners are used it is also possible to decode commercials when another program is being watched. Preferably data transmitted with the commercials indicates the category of the particular commercial. Advantageously the software selects for storage in memory only commercials in the selected category and general category commercials. The software provides the user, via the menu command control 67, with category options e.g. motor vehicles, household, holidays, clothing, so that appropriate commercials are stored in memory. Thereafter, when a viewer is watching a program which has commercial breaks, the viewer is presented with the option to view the live broadcast commercials or to replace with commercials of any of the selected categories. In a further option, the commercial retrieved may be linked or otherwise correlated to the category of program being watched. Thus the software provides an option for say motor vehicle related commercials to be retrieved and shown when watching program material related to motor vehicles, similarly for holiday programs etc.

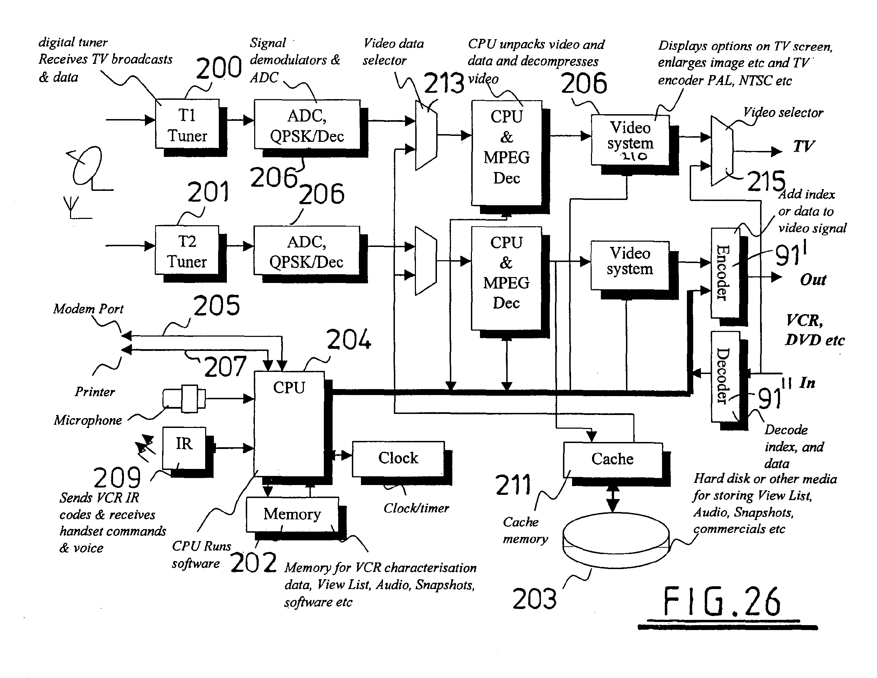

In the preferred embodiment described with reference to Figure 26, two tuners 200 and 201 are utilised, both are digital and therefore able to receive extra digital data along with TV program content. Such a system also is advantageously adapted to allow a video recorder or other device to be connected for recording digital broadcasts from a channel that is different to the channel currently being viewed, overcoming the limitation of an analogue tuner associated with conventional video recorders which cannot be utilised for separately recording digital broadcasts. The figure further illustrates two signal demodulators 206, one connected to each of tuners 200, 201. These demodulate the received signal and incorporate the necessary analogue/digital converters and quadrature amplification demodulators. The signals are passed to respective processing units 208 which unpacks the video and data and decompresses video signal. These signals then pass to a respective video system 210. In the case of the signal processed by Tuner T1 the signal is passed to a television for viewing. Tuner T2 handles signals which are to be recorded on a video cassette recorder (VCR), Digital Versatile Disk (DVD), or which are downloaded to the Hard disk 203 or other media storage device. An encoder 91' is provided to add index information and/or other data to the video signal as required to, for example to enable the automatic tape control facility to function as described in our earlier proposals. The Decode 91' decodes any index and data from the tape being read. The CPU 204 runs the installed software. The memory 202 stores VCR Characterisation data, as discussed in our earlier proposals, and the view lists, Audio Snapshots, software etc. A clock is shown at 88. A connection line to a modem port is shown at 205 and a connection to a printer port of 207. The microphone is shown at 275 and the infrared transceiver is shown at 209 and serves to send VCR commands and receive commands from the remote handset which may include voice signals. A memory cache is shown separately at 211 and provides a temporary memory to cater for situations when the write and read head of the hard disk is moving and to allow for the variable writing and reading rates of the hard disk. Video data selectors are shown at 213 and 214, one for each tuner selection. These facilitate selection of material from the hard disk 203 to go to either TV or VCR, via the decoding sections, as an alternative to the material decoded from the respective tuner selections. Finally, video selector 215 permits selection of material from the VCR, DVD for display on television.

While operating to receive preferred commercials tuner 200 is devoted to receiving broadcast program material and commercials as normal, while tuner 201 is utilised for receiving alternative commercials which are temporarily stored in local memory 202. Preferred commercials can be received while in standby mode where the TV is not displaying broadcast content using a single tuner, or in the preferred embodiment while the TV is in use via tuner 201. Preferred commercials can be acquired by switching tuner 201 to a channel dedicated to the transmission of commercials.

Typically memory 203 would be a hard disk or recordable DVD or the like of 600 Megabyte or more capacity. Digital broadcasts data rates vary, but 30 - 60 Megabytes per second is typical of the average data rate, 600 Megabytes therefore would store 10-20 minutes of preferred commercials. Typically in a conventional system 40 minutes of commercials are transmitted along with 4 hours of programming, therefore if the preferred commercials replace 50% of the commercials transmitted they would repeat every 2-4 hours.

Under the proposed system conventional commercials are preferably standardised to specific lengths incrementing in units of say 10 seconds which would facilitate seamless commercial substitution, preferably conventional commercials received by tuner 200 would be a mix of general commercials and commercials that would be expected to be substituted locally. In this way each viewer would still receive general adverts which they may otherwise miss and the amount of local storage is reduced. Each advert received by tuner 200 or 201 can carry data identifying its content and category or alternatively these could be transmitted as a schedule of commercial information as with the likes of program schedules. In the preferred embodiment each advert carries data identifying its content, length and other information and data indicating if a time slot is active for local substitutions and the length thereof. The commercials transmitted during a substitution time slot can also be assessed against a preference list held in memory 202 by CPU 204 to determine if viewing should proceed.

If a substitution time slot is active and it is appropriate, data stored locally in memory 203 can be assessed for a substitution commercial. At this point the next un-played commercials in local memory 203 are selected that will fit in the allocated active substitution time slot. This process continues until all commercials have been viewed at which point the process can repeat or further commercials received via tuner 201 could replace already viewed local preferred commercials. Preferably once a preferred commercial has been viewed the allocated number of times memory allocated is freed for further preferred commercials which are received on an ongoing basis. Preferred commercials of the present invention may be viewed more than once according to the present invention, indeed it may be desired to organise preferred commercials to be sequenced according to viewer or broadcaster preferences. If during substitution of a commercial the viewer switches channel the commercial can either automatically terminate in which case it would be marked for replaying, or the viewer can have the option to continue with the commercial.

Typically several tens of normal digital channels are broadcast, this allows for the possibility of acquiring preferred commercials at a fast rate by switching tuner 201 to a channel scheduled to transmit a commercial that meets viewer selection criteria. A schedule of commercial transmission content, duration, start time and duration received through modem 205 or via tuner 201 is stored in memory 202. When a preferred commercial is transmitted tuner 201 is switched by processor 204 to the appropriate channel, the preferred commercial acquired and stored in local memory 203 for later substitution. In this way preferred commercials can be acquired faster, the need for local storage then may be further reduced form 600 Megabytes to say 200 Megabytes.

Transmitting commercial schedules need not interfere with the flexibility that the broadcaster normally enjoys regarding late substitution of broadcast material as each system according to the present invention can detect if a broadcast commercial matches the scheduled commercial, failing a match the broadcast commercial would not be acquired for substitution. Advert schedules can also advantageously be periodically updated and transmitted along with the normal digital program content. Preferably the selection criteria for preferred commercials is determined by the broadcaster transmitting categories to the viewer via data transmitted along with the program content, EPG's and other services, the user selects from the categories stored in memory 202 using menus displayed on the television screen facilitated by video circuit 206 and CPU 204, remote control of Figure 17 is utilised with cursor control keys 16 to effect selections which are then stored as preferences in memory 202 and may also be transmitted to the broadcaster via modem 205. Preferred commercials may also be acquired through modem 205.

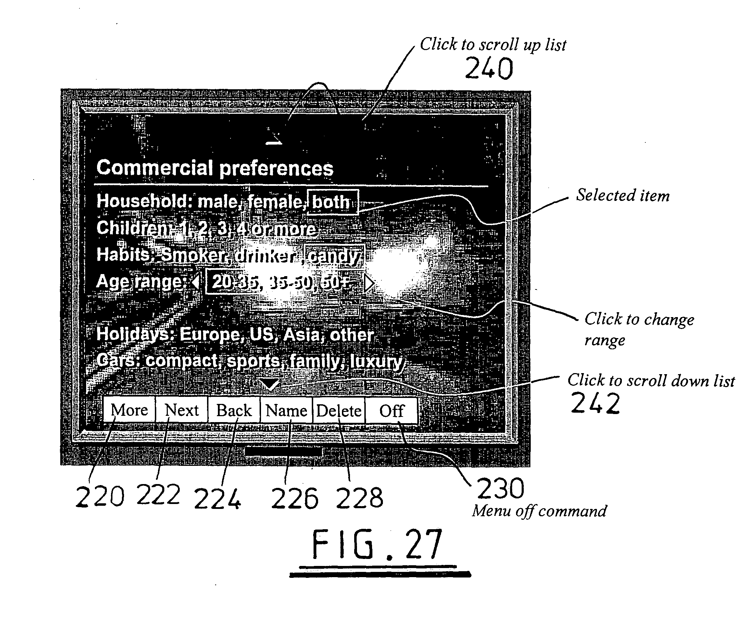

Figure 27 illustrates one possible screen layout for selection of commercial preferences. The format of the screen is transmitted by the commercial provider. The viewer selects from the listed items using the cursor controls or mouse to click on the options. Clicking on up and down arrows 240, 242 facilitates moving up and down the listed items as the case may be. Selected items are shown outlined in the example. There may be more than one screen of options. Menu command options are shown along the lower edge and include Move 220, Next 222, Back 224, Name 226, Delete 228 and Off 270.

Move shows further options, Mark and Back facilitate moving forward or backward through screen displays. The Name options facilitates assigning a name of a viewer for a particular commercial preference so that the appropriate commercials are displayed when that viewer is watching the television. The Delete command permits previous preferences to be deleted. The Off command deletes this menu option.

The completed preference lists may be transmitted back to the broadcaster for example for analysing the type of commercials which are of interest and/or the characteristics of the person who selects to view them.

The capturing and display of user selected categories of advertisement is also applicable to the "banner" commercials transmitted along with the likes of electronic programming guides (EPG). The electronic program guides are transmitted at regular intervals and stored in the memory of a set top box, satellite decoder or other system. With existing systems any banner advertisement transmitted along with data is displayed on screen when EPG is retrieved. According to the invention the advertisements are categorised so that the user can select to receive and have displayed banner advertisements falling into a desired category. The user selections may be as previously described with reference to full screen commercials. This system is particularly applicable to a digital system.

Studies have shown that a viewer accesses an EPG four times per hour and that on average a television is viewed 6 hours per day. On this basis 24 banner adverts would be viewed each day, each banner varies in data content but 4Kbyes of data is typical for compressed banners of the JPEG type. To store locally a single days banners would require 96Kbtyes of system memory. In practice 50Kbyes of memory may be sufficient as each banner may be viewed more than once in a random or predetermined sequence keyed to the program being viewed or the current selection in the EPG. Acquired adverts can be stored in nonvolatile system memory until they are replaced, in this way preferred commercials/adverts are available to a viewer as soon as viewing commences.

According to one embodiment, a plurality of banner advertisements are transmitted en-block to be acquired by the memory of the set top box. This may be done when the television is in stand by mode. Assuming 1000 advertising categories, and that each banner utilises 4 Kbytes and that the Data rate into the set top box > 1 Mbyte/sec, then the transfer of all the adverts as a block would take 4 seconds. In an alternative the block size can be reduced and transmitted with the EPG. Each time the EPG is transmitted (say every 5 seconds) a plurality of new banners are transmitted in a block of say 5 each time - so that over say a 16 minute period 1000 different banner advertisements are transmitted. The different adverts can cycle every 12 hours or so.

According to one embodiment all the transmitted banner advertisements are captured and stored in memory. The programming software then acts to retrieve and display only those advertisements which fall into the selected categories. In another preference embodiment the software acts to capture and store only those banner advertisements which fall into the user selected categories.

In yet a further alternative the programming software acts to select, for display, form a plurality of transmitted banner commercials, one which falls into a users selected categories. This avoids the need to store a plurality of commercials in memory. It may operate with either of the above described full block size or reduced block size banner transmissions. In the unlikely event that the reduced block size transmissions did not include an advertisement of a desired category, a default advertisement may be displayed corresponding to the last captured banner advertisement which would be stored in memory. Other message, adverts, special offers may also be targeted at selected viewers of the present system. These messages stored in memory according to user set-up options including preferences and/or other user information such as security codes. These messages can then be displayed at the users option, typically at the commencement of viewing a message would be displayed to inform the viewer that they have messages waiting. These messages may be targeted at a group of viewers meeting a particular criterion or at an individual household. These additional messages may be transmitted during normal viewing or while the system is in standby mode.

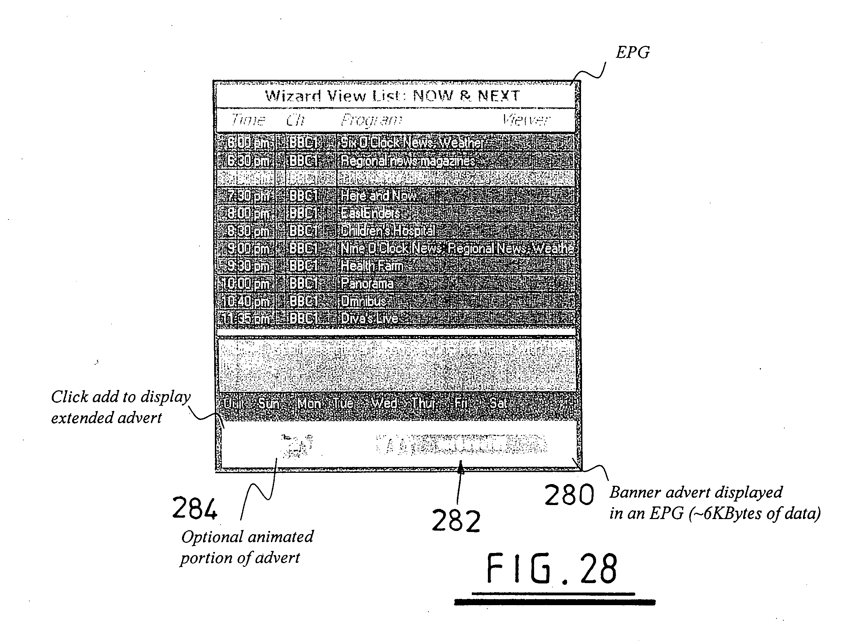

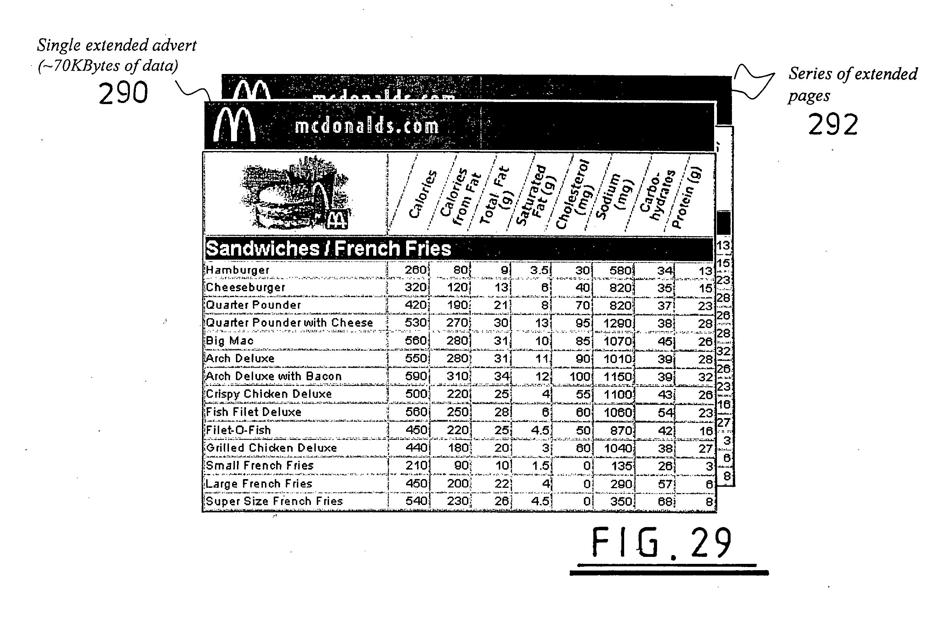

Figure 28 is an example of a typical screen display for an EPG and illustrates an example of a banner advertisement 280 displayed along the lower edge of the screen corresponding to say 6Kbytes of data. This display may comprise static (see 282) and/or animated (see 284) portions. In one embodiment on-screen control menu options, accessed say via a remote handset or a mouse type control, allows the user to see an extended advertisement. This may comprise one or more screens of advert related material. This may be stored in the set top box memory or accessed via a data line. A single extended advert may utilise 70 Kbytes of data. Figure 29 shows in its entirety one such extended screen at 290 and others (292) may be linked to it as subsequent pages/screens of extended advert. A user command facilitates pulling up of subsequent pages or once selected they may scroll through automatically until the user cancels the extended advert command.

The viewer need not enter user preferences directly into the set top box; they may instead fill out a paper form which is sent to the service provider. The service provider subsequently sends the preferences to the set top box via a modem or by broadcasting the data along with user set top box address data such as the like used for updating so-called smart cards associated with subscription viewing services.

In another alternative, the broadcaster, for example using the existing security provisions of the set top box, directs commercials, be they banners or otherwise, to the user according to their user preferences. The material transmitted is stored locally for later retrieval.

Storing banner adverts locally in system memory allows the broadcaster to control the viewing of these banners. In such a system the broadcaster can have a high degree of confidence that a banner has been seen because the banner could be configured not be replaced until such time that it has been viewed. This contrasts with existing systems where the viewer may not switch on at the correct time or channel for a particular advert to be viewed. Banner adverts can be transmitted as digital data in the vertical blanking interval for conventional analogue television or received via the modem. For digital television transmissions the advert data can be embedded into the transmitted data stream. Acquisition of preferred commercials/adverts can performed by parsing the received data stream to extract adverts that contain identification data corresponding to the content of the advert/commercial. Studies have shown that viewers refer to program guides.

Data relating to viewing habits and responses to adverts can advantageously be automatically generated by a set top box or other system monitoring whereby monitoring of viewing trends is performed. A code word can be generated relating to viewing preferences and viewing habits, this would provide valuable feedback to the broadcaster. The broadcaster could receive code words when the viewer renews subscription payments for programs and other services. The code word could form part of the customer information provided to the broadcaster, transmitted verbally, electronically or via the mail service. A smart card containing user data and access codes could also be utilised.

Certain characters of the alphabet may be excluded from the coding to avoid errors introduced by the viewer when reproducing the number such as would be the case for example with the letter 'O' which could be confused with the numeric '0'.

Preferably the code word is a compressed representation of various information of interest to the broadcaster which is presented to the viewer in a multi-character alphanumeric form displayed on the TV screen. The initial code word represents preferences entered by the user, this need only be sent to the broadcaster when first set-up or subsequently if changed, indeed at the outset the program viewing habits and other viewing details will not have been acquired. After the initial code word subsequent code words may contain specific viewer responses to programmes and adverts.

A number of methods can be used to generate the code word. One method is to code each preference category such as the number of children in the house and their ages by assigning a single bit to signify if a household has children and further bits only if the first bit is set. Two further bits can then be used to signify 1, 2, 3 or more children, in this way a variable bit length is assigned to each category.

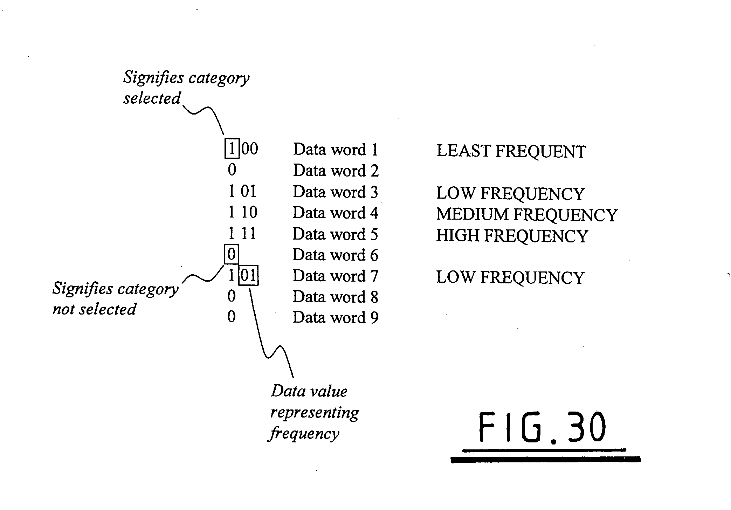

For the example described 1 or 3 bits are used to code a category dependent on the data entered by the viewer. Figure 30 illustrates nine such categories coded as variable length codes, data words, 1, 3, 4, 5 and 7 are 3 bits long while data words 2, 6, 8 and 9 are single bit words. Each of the extra bits assigned to a data words 1, 3, 4, 5 and 7 represent information about the respective category, in this example the frequency of viewing different types of TV programme is represented.

Each of the four possible responses: least frequent, low, medium and high are automatically assessed by the set top box every time a programme is viewed. These data words are combined with a normalising value representing the total number times the highest category was accessed. In this way an approximate value for viewing frequency can be determined for each category.

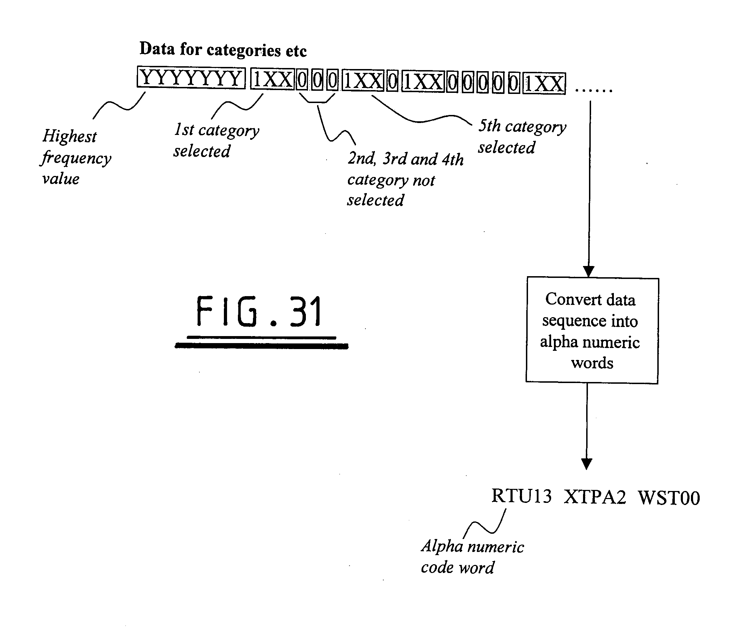

Figure 31 illustrates data representing 13 categories and the normalising data representing the highest frequency data, the combined sequence of data for each of the categories is also illustrated as a multi-character alphanumeric word. Preferably each code word is grouped into blocks, 15 characters could grouped into three blocks of five which is sufficient to encode 30 categories of programs, adverts or viewing preferences.

Extra bits of data can also be encoded into the code word to ensure that the code word is conveyed without error such as parity bits and viewer specific data such as a serial number. In this way the broadcaster can determine if the viewer is providing the correct information and that it is without error.

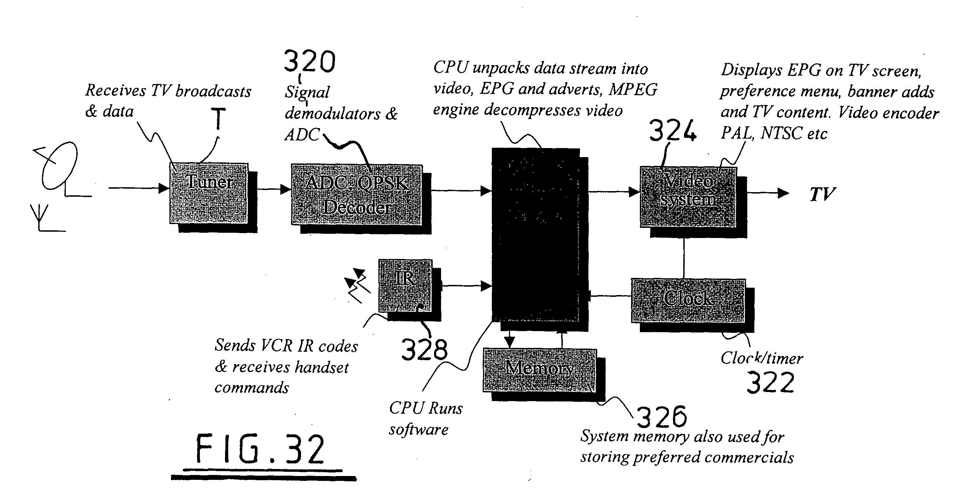

Figure 32 illustrates a system utilising conventional semiconductor memory to store user preference information, viewing trends and targeted adverts of one embodiment of the present system.

Code words of the present invention enable the broadcaster to establish viewing trends and product preferences for all of their viewers rather than a sample subset as is the case for existing methods. Other information can be encoded in a similar way producing a sequence of variable length data words, which are then concatenated and converted to an alphanumeric code word.

Tuner (T) receives TV broadcasts and data which are passed to the signal demodulators and ADC (320). A CPU runs the software and unpacks the data stream into video, EPG and adverts. An PMPEG engine decompresses the video. A clock/timer 322 controls the CPU and a video system 324 which displays the EPG on the TV screen (not illustrated), and preference menu, banner advertisements and TV content as well as performing video encoder functions. A memory 326 stores the system software and is used as the memory for commercials. An I/R 328 unit sends VCR IR codes and receives hand set commands.

## Claims

1. A system for the display of targeted commercials on a television receiver comprising, means for receiving commercials, means for selecting from said commercials, means for displaying selected commercials.

2. A system as claimed in claim 1 and further comprising means for accepting input commands or data from a viewer.

3. A system as claimed in anyone of claims 1 or 2 whereby said means for receiving commercials operates while the television display is not in use.

4. A system as claimed in anyone claims 1 to 3 further comprising a means for automatically replacing broadcast commercials with commercials stored locally in a memory means.

5. A system as claimed in anyone of claims 1 to 4 further comprising a means for enabling a user to indicate a response to an advert whilst it is being viewed.

6. A system as claimed in anyone of claims 1 to 5 in which the commercials are banner advertisements.

7. A system as claimed in anyone of claims 1 to 5 in which the commercials are other messages, adverts, special offers are selectively displayed by the user electing to view each item

8. A system as claimed in anyone of claims 1 to 7 in which the receipt of messages and/or adverts and/or special offers and/or other data prompts a message to be displayed and or an audible sound to be heard

9. A system as claimed in anyone of claims 1 to 8 in which the means for selecting from said commercials utilises customer specific data sent by the broadcaster

10. A system as claimed in anyone of claims 1 to 9 in which the means for storing a plurality of commercials is used to ensure that a commercial is seen

11. A system as claimed in anyone of claims 1 to 10 in which the means for displaying selected commercials uses user preferences

12. A system as claimed in anyone of claims 1 to 11 in which the means for displaying selected commercials uses user preferences and current selections in the electronic program guide

13. A system as claimed in anyone of claims 1 to 11 in which the means for displaying selected commercials uses user preferences and the television programme currently being viewed

14. A system as claimed in anyone of claims 1 to 13 in which the means for displaying selected commercials uses user preferences and the time of day and selections made in the electronic programme guide

15. A system as claimed in anyone of claims 1 to 14 in which system monitors viewers responses to commercials and/or viewing habits and a means for generating a representative statistical code word

16. A system as claimed in anyone of claims 1 to 15 in which the data used by the means for selecting from said commercials is also coded into a representative code word

17. A system as claimed in claim 1 to 16 in which the representative code word is selectively displayed on the TV screen

18. A system as claimed in claim 6 in which the banner advertisements are digitally transmitted.

19. A system as claimed in any one of claims 6 to 18 in which a plurality of banner advertisements are transmitted en-block and means is provided to retrieve and display a banner advertisement which falls into a user selected category.

20. A system as claimed in any one of claims 6 to 19 in which said plurality of transmitted banner advertisements are stored in memory and said means selects an advertisement for display from the stored advertisements.

21. A system as claimed in claim 20 in which any banner advertisements falling into a user selected category are stored in memory.

22. A system as claimed in claim anyone of claims 1 to 21 and further comprising means storing a plurality of commercials as digital representations, means for converting said digital representations into a television signal or data and means for displaying said commercials.

23. A system as claimed in anyone of claims 1 to 22 further comprising a means for selecting an extended version of a commercial and/or means for connecting to a further source of information or data.
